# EUROPÄISCHE PATENTSCHRIFT

(11) **EP 0 468 160 B1**
(45) Veröffentlichungstag und Bekanntmachung des Hinweises auf die Patenterteilung: **14.09.1994**
(21) Anmeldenummer: 91108537.1
(22) Anmeldetag: 25.05.1991
(51) Int. Cl.: A01F 12/28, A01D 41/02

(54) **Selbstfahrender Mähdrescher**
Self-propelled combine
Moisonneuse-batteuse automotrice

(30) Priorität: 26.07.1990 DE 4023720
(43) Veröffentlichungstag der Anmeldung: 29.01.1992
(73) Patentinhaber: CLAAS OHG, D-33426 Harsewinkel (DE)
(72) Erfinder: Heidjann, Franz, Dipl.-Ing., W-4834 Harsewinkel (DE)

(56) Entgegenhaltungen:
- EP-A- 0 334 957
- DE-A- 2 260 881
- DE-A- 3 125 659
- DE-C- 44 845
- US-A- 3 512 534
- US-A- 4 796 645

## Beschreibung

Die Erfindung betrifft einen selbstfahrenden Mähdrescher mit zwei quer zur Fahrtrichtung unmittelbar hintereinander angeordneten aus je einer Trommel und einem Korb bestehenden, im Tangentialfluß arbeitenden Dreschwerken, wobei beide Trommeln gleichzeitig antreibbar sind und der Spalt zwischen dem Korb und der Trommel des ersten Dreschwerkes als auch der Spalt zwischen dem Korb und der Trommel des zweiten Dreschwerkes einstellbar sind und wobei die Umfangsgeschwindigkeit der, in Arbeitsrichtung betrachtet, ersten Trommel kleiner ist als die der daran anschließenden zweiten Trommel. Derartige selbstfahrende Mähdrescher sind aus der Praxis hinreichend bekannt. Von den beiden hintereinanderangeordneten Dreschwerken übernimmt dabei das erste Dreschwerk neben seiner Funktion als Dreschwerk selbst außerdem die Aufgabe, das beispielsweise von einem Schrägförderer in nicht immer gleichmäßiger Menge zugeführte Erntegut zu vergleichmäßigen, so daß vom zweiten Dreschwerk ein in engen Grenzen variierender Gutstrom bearbeitet werden kann, wodurch der Ausdrusch selbst wesentlich verbessert wird. Als Nachteil hat sich jedoch herausgestellt, daß de Anpassung der beiden Dreschwerke auf unterschiedliche Gutarten und Erntebedingungen zuwenig Bedeutung beigemessen wurde. Der vorliegenden Erfindung liegt daher das Problem zugrunde, einen Mähdrescher der eingangs näher bezeichneten Art so auszubilden, daß die an ihn zu stellenden Anforderungen im Hinblick auf die Anpassung der beiden Dreschwerke bei unterschiedlichen Einsatzkriterien in zufriedenstellender Weise erfüllt werden. Das wird im wesentlichen dadurch erreicht, daß die einander abgewandten Enden der Körbe separat und die einander zugewandten Enden der Körbe gemeinsam verstellbar sind. Weitere Ausbildungen der Erfindung sind in den Unteransprüchen näher definiert.

Durch die deutsche Patentschrift 44 845 ist zwar eine Dreschmaschine bekannt, bei welcher zwei Dreschwerke unmittelbar hintereinander angeordnet sind. Auch bei diesen beiden Dreschwerken sind die Körbe verstellbar vorgesehen. Die Verstellung erfolgt jedoch stets gleichmäßig und gleichzeitig, wodurch eine individuelle Anpassung beider Dreschwerke an alle möglichen unterschiedlichen Einsatzkriterien nicht gewährleistet ist.

Im folgenden soll die Erfindung anhand eines Ausführungsbeispieles und mehrerer dieses schematisch darstellender Figuren näher erläutert werden. Dabei zeigt:

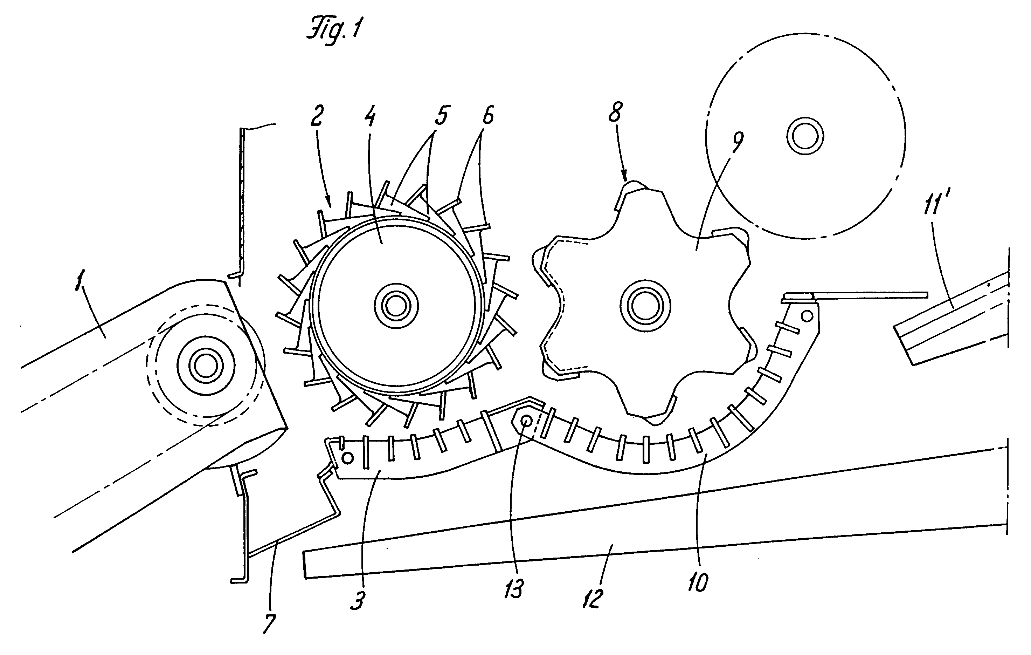

- Fig. 1: den dreschwirksamen Teil eines selbstfahrenden Mähdreschers in der Seitenansicht,
- Fig. 2: den in Fig. 1 dargestellten Teil präziser bezogen auf die Korbverstellung und

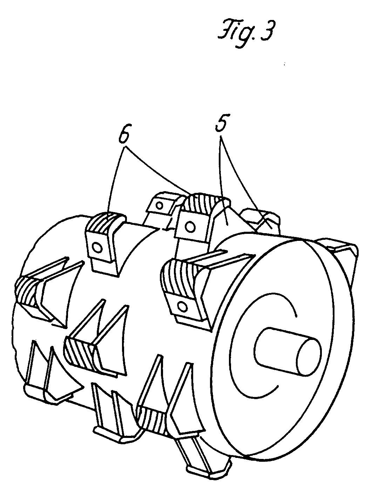

- Fig. 3: einen Teil des ersten Dreschwerkes perspektivisch
Mit 1 ist ein Schrägförderer eines nicht näher dargestellten selbstfahrenden Mähdreschers bezeichnet, von dem aus das Erntegut einem ersten Dreschwerk 2 zugeführt wird. Dieses Dreschwerk 2 besteht aus einem Dreschkorb 3 und einer Dreschtrommel 4. Letztere ist als vollzylindrischer Körper ausgebildet, auf den versetzt zueinander Halter 5 aufgeschweißt sind. Mit diesen Haltern 5 können je nach der zu erntenden Gutart unterschiedlich ausgebildete Mitnehmer 6 aufgeschraubt werden. Evtl. vom Schrägförderer 1 im Gutstrom herangegeführte Steine werden in eine dem ersten Dreschwerk 2 vorgeordnete Steinfangmulde 7, um Schäden am Dreschwerk zu vermeiden, abgeschieden. Der vom ersten Dreschwerk teilweise ausgedroschene und gleichzeitig, bezogen auf die Gutzufuhr, vergleichmäßigte Gutstrom gelangt zu einem unmittelbar an das erste Dreschwerk anschließenden zweiten Dreschwerk 8, welches ebenso wie das erste Dreschwerk nach dem Tangentialfluß-System arbeitet und aus Trommel 9 und Korb 10 besteht.

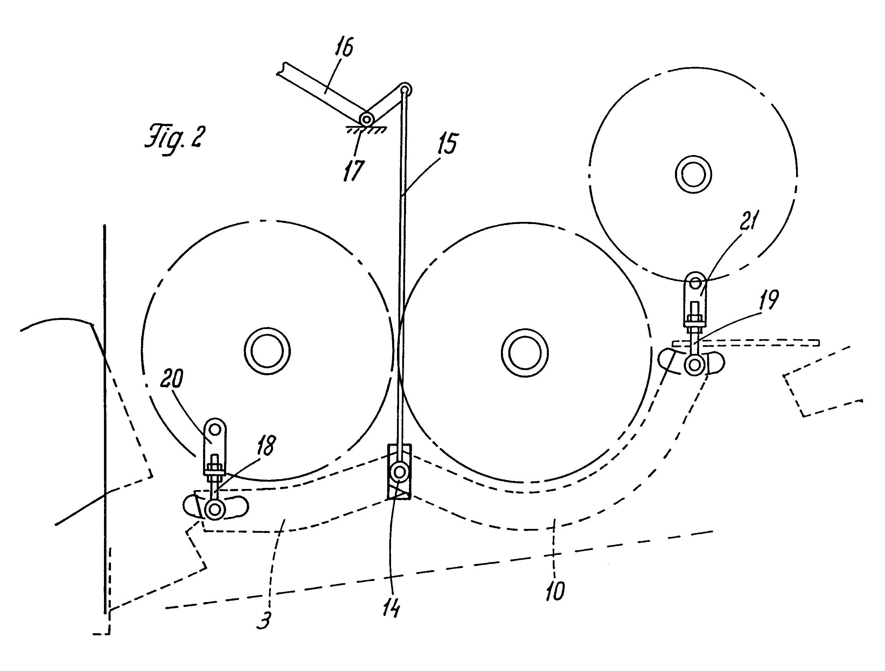

Die Trommel 9 weist dabei ebenso wie die Trommel 4 einen geschlossenen Trommelmantel auf. In diesem Dreschwerk 8 findet der endgültige Ausdrusch des Erntegutes statt. Die lediglich noch mit Restkörnern beladene aus dem zweiten Dreschwerk 8 austretende Gutmatte gelangt in eine Nachabscheideeinrichtung 11', welche im vorliegenden Fall als Schüttlerhorde ausgebildet ist. Sie kann aber ebensogut als eine rotierende zentrifugalwirkende Einrichtung ausgebildet werden. Auf die Funktions dieser nachgeordneten Einrichtung 11' und der dieser sowie den Körben 3 und 10 zugeordneten Fördereinrichtung 12 braucht an dieser Stelle nicht näher eingegangen zu werden, da sie von vielen Mähdreschern aus der Praxis hinreichend bekannt sind.
Insbesondere aus der Fig. 2 ist zu erkennen, daß die beiden Körbe 3 und 10 an ihren einander zugewandten Enden von einer gemeinsamen Achse 13 gehalten sind, die beidendig in Augen 14 von Zugstangen 15 gelagert ist. Die Zugstangen 15 sind mit ihren den Augen 14 abgewandten Enden mit Verstellhebeln 16 gelenkig verbunden, welche in Konsolen 17 verstellbar gelagert sind und in jeder Stellung auf nicht dargestellte Weise arretiert werden können. Somit kann die Achse 13 in der Höhe verlagert werden, wodurch der Ausgangsspalt zwischen dem Korb 3 und der Trommel 4 des ersten Dreschwerkes gleichzeitig auch der Eingangsspalt zwischen dem Korb 10 und der Trommel 9 des zweiten Dreschwerkes eingestellt werden können. Die einander abgewandten Enden der Körbe 3 und 10 werden von Stellschrauben 18 und 19 getragen, die verstellbar an mit dem nicht dargestellten Mähdrescherrahmen fest verbundenen Haltern 20 und 21 befestigt sind. Dies bedeutet, daß der Eingangsspalt des ersten Dreschwerkes 2 und der des zweiten Dreschwerkes 8 individuell einstellbar sind.

## Patentansprüche

1. Selbstfahrender Mähdrescher mit zwei quer zur Fahrtrichtung unmittelbar hintereinander angeordneten, aus je einer Trommel (4 und 9) und einem Korb (3 und 10) bestehenden, im Tangentialfluß arbeitenden Dreschwerken (2 und 8), wobei beide Trommeln (4 und 9) gleichsinnig antreibbar und der Spalt zwischen dem Korb (3) und der Trommel (4) des ersten Dreschwerkes (2) als auch der zwischen dem Korb (10) und der Trommel (9) des zweiten Dreschwerkes (8) einstellbar sind, und wobei die Umfangsgeschwindigkeit der, in Arbeitsrichtung betrachtet, ersten Trommel (4) kleiner ist als die der daran anschließenden zweiten Trommel (9),
**dadurch gekennzeichnet**,
daß die einander abgewandten Enden der Körbe (3 und 10) separat und die einander zugewandten Enden gemeinsam verstellbar sind.

2. Selbstfahrender Mähdrescher nach Anspruch 1,
**dadurch gekennzeichnet**,
daß die einander zugewandten Enden der Körbe (3, 10) an einer gemeinsamen höhenveränderbaren Achse (13) gelagert sind.

3. Selbstfahrender Mähdrescher nach Anspruch 2,
**dadurch gekennzeichnet,**
daß an zumindest einem Ende der Achse (13) ein Zugmittel (15) angreift, welches in unterschiedlichen Stellungen arretierbar ist.

4. Selbstfahrender Mähdrescher nach den Ansprüchen 1 bis 3,
**dadurch gekennzeichnet**,
daß die einander abgewandten Enden der Körbe (3 und 10) über Stellschrauben (18, 19) verstellbar sind, die mit am Mähdrescherrahmen befestigten Haltern (20, 21) verbunden sind.

5. Selbstfahrender Mähdrescher nach den Ansprüchen 1 bis 4,
**dadurch gekennzeichnet,**
daß zumindest die in Arbeitsrichtung betrachtet erste Trommel (4) als mit auswechselbaren Mitnehmern (6) besetzter vollzylindrischer Körper ausgebildet ist.

6. Selbstfahrender Mähdrescher nach den Ansprüchen 1 bis 5,
**dadurch gekennzeichnet**,
daß der in Arbeitsrichtung betrachtet ersten Trommel (4) zugeordnete Korb (3) mit austauschbaren Segmenten besetzt ist.

## Claims

1. A self-propelled combine harvester having two threshing mechanisms (2 and 8) which are arranged in immediate succession transversely to the direction of travel and which operate in the tangential flow mode and which each comprise a drum (4 and 9) and a concave (3 and 10), wherein the two drums (4 and 9) are drivable in the same direction and the gap between the concave (3) and the drum (4) of the first threshing mechanism (2) and also that between the concave (10) and the drum (9) of the second threshing mechanism (8) are adjustable, and wherein the peripheral speed of the drum (4) which is the first drum as viewed in the working direction is lower than that of the subsequent second drum (9), characterised in that the mutually remote ends of the concaves (3 and 10) are separately adjustable and the mutually facing ends are jointly adjustable.

2. A self-propelled combine harvester according to claim 1 characterised in that the mutually facing ends of the concaves (3, 10) are mounted on a joint shaft (13) which is variable in respect of height.

3. A self-propelled combine harvester according to claim 2 characterised in that a pulling means (15) which can be arrested in different positions engages at least one end of the shaft (13).

4. A self-propelled combine harvester according to claims 1 to 3 characterised in that the mutually remote ends of the concaves (3 and 10) are displaceable by way of adjusting screws (18, 19) which are connected to holders (20, 21) secured to the combine harvester frame.

5. A self-propelled combine harvester according to claims 1 to 4 characterised in that at least the drum (4) which is the first drum as viewed in the working direction is in the form of a fully cylindrical body fitted with replaceable entrainment members (6).

6. A self-propelled combine harvester according to claims 1 to 5 characterised in that the concave (3) associated with the drum (4) which is the first drum as viewed in the working direction is fitted with interchangeable segments.

## Revendications

1. Moissonneuse-batteuse automotrice comprenant deux mécanismes de battage (2 et 8) disposés immédiatement l'un à l'arrière de l'autre et transversalement à la direction de la marche, constitués chacun par un tambour (4 et 9) et par un contre-batteur (3 et 10) et fonctionnant en flux tangentiel, les deux tambours (4 et 9) étant entraînés dans le même sens et l'interstice entre le contre-batteur (3) et le tambour (4) du premier mécanisme de battage de même qu'également entre le contre-batteur (10) et le tambour (9) du second mécanisme de battage étant réglable, la vitesse périphérique du premier tambour (4), vu dans la direction du travail, étant plus faible que celle du second tambour (9) qui s'y raccorde,
caractérisée en ce que
les extrémités des contre-batteurs (3 et 10) qui sont à l'opposé l'une de l'autre peuvent être déplacées séparément et les extrémités tournées l'une vers l'autre en commun.

2. Moissonneuse-batteuse automotrice selon la revendication 1, caractérisée en ce que les extrémités tournées l'une vers l'autre des contre-batteurs (3, 10) sont montées sur un axe commun (13) de hauteur modifiable.

3. Moissonneuse-batteuse automotrice selon la revendication 2, caractérisée en ce qu'un moyen de traction (15) coopère avec au moins une extrémité de l'axe (13), moyen qui peut être bloqué dans des positions diverses.

4. Moissonneuse-batteuse automotrice selon l'une quelconque des revendications 1 à 3, caractérisée en ce que les extrémités à l'opposé l'une de l'autre des contre-batteurs (3 et 10) peuvent être déplacées par des moyens de réglage (18, 19) qui sont reliés à des supports (20, 21) fixés au châssis de la moissonneuse-batteuse.

5. Moissonneuse-batteuse automotrice selon l'une quelconque des revendications 1 à 4, caractérisée en ce que le premier tambour (4) au moins, vu dans la direction du travail, est constitué par un corps complètement cylindrique équipé d'éléments d'entraînement (6) interchangeables.

6. Moissonneuse-batteuse automotrice selon l'une quelconque des revendications 1 à 5, caractérisée en ce que le contre-batteur (3) associé au premier tambour (4), vu dans la direction du travail, est équipé de segments interchangeables.
